# EUROPÄISCHE PATENTANMELDUNG

(11) **EP 3 918 912 A1**
(43) Veröffentlichungstag der Anmeldung: **08.12.2021**
(21) Anmeldenummer: 21176315.6
(22) Anmeldetag: 27.05.2021
(51) Int. Cl.: A01K 5/02, G05D 1/02

(54) **ANORDNUNG ZUR STEUERUNG EINES SELBSTFAHRENDEN ARBEITSGERÄTS**

(30) Priorität: 03.06.2020 AT 504832020
(71) Anmelder: Wasserbauer Holding GmbH, 4595 Waldneukirchen (AT)
(72) Erfinder: Wasserbauer, Franz, 4595 Waldneukirchen (AT)
(74) Vertreter: KLIMENT & HENHAPEL

(57) **Zusammenfassung**

Anordnung und Verfahren zur Steuerung eines selbstfahrenden Arbeitsgeräts (2) für den Einsatz im Stall (1) und auf landwirtschaftlichen Betriebsgeländen zur Verrichtung eines Arbeitsvorganges mittels eines Funktionselements (7) des Arbeitsgeräts (2), wobei am Arbeitsgerät (2) eine Steuereinrichtung (9) zur Ansteuerung des Funktionselements (7) angeordnet ist und eine Positionsermittlungseinheit zur Navigation des selbstfahrenden Arbeitsgeräts (2) entlang einer Fahrstrecke (F) vorgesehen ist. Es wird vorgeschlagen, dass die Positionsermittlungseinheit ein am Arbeitsgerät (2) angeordnetes, positionsermitteltes UWB (Ultra Wide Band)-Modul (11p) für das Senden und Empfangen von UWB (Ultra Wide Band)-Signalen sowie zumindest vier unbewegt im Stall (1) und/oder am landwirtschaftlichen Betriebsgelände angeordnete UWB (Ultra Wide Band)-Referenzmodule (11r) für das Senden und Empfangen von UWB (Ultra Wide Band)-Signalen umfasst, und das positionsermittelte UWB (Ultra Wide Band)-Modul (11p) mit der Steuereinrichtung (9) zur Ansteuerung des Funktionselements (7) verbunden ist. Die Erfindung ermöglicht die Verrichtung des Arbeitsvorganges in örtlich zuverlässiger und genauer Positionierung.

## Beschreibung

Die Erfindung betrifft eine Anordnung zur Steuerung eines selbstfahrenden Arbeitsgeräts für den Einsatz im Stall und auf landwirtschaftlichen Betriebsgeländen zur Verrichtung eines Arbeitsvorganges mittels eines Funktionselements des Arbeitsgeräts, wobei am Arbeitsgerät eine Steuereinrichtung zur Ansteuerung des Funktionselements angeordnet ist und eine Positionsermittlungseinheit zur Navigation des selbstfahrenden Arbeitsgeräts entlang einer Fahrstrecke vorgesehen ist, gemäß dem Oberbegriff von Anspruch 1. Die Erfindung betrifft des Weiteren ein entsprechendes Verfahren gemäß dem Oberbegriff von Anspruch 4.

In der modernen Stalltechnik werden zunehmend selbstfahrende Arbeitsgeräte eingesetzt, beispielsweise als Futtertransporter zum Ausbringen von Futter, oder als Futterschieber zum Umschichten von bereits ausgebrachtem Futter. Futtertransporter weisen in der Regel einen Aufnahmeraum für Futter auf, der auch mit einem Mischer versehen sein kann. Der Futtertransporter fährt selbsttätig ein Futterlager an, in dem der Aufnahmeraum des Futtertransporters mit Futter befüllt wird, und fährt in weiterer Folge eine vorgegebene Fahrstrecke ab, wo er das Futter mithilfe einer Austragseinheit, beispielsweise einer Förderschnecke, etwa im Futtergang eines Stalls ausbringt. In diesem Fall handelt es sich bei dem oben genannten Arbeitsvorgang um das Ausbringen von Futter, und bei dem Funktionselement um die Austragseinheit, die Futter aus dem Aufnahmeraum des Arbeitsgeräts dosiert und hinsichtlich der ausgetragenen Futtermenge steuerbar auswirft. Der steuerbare Auswurf der Futtermenge erfolgt dabei anhand der bekannten Fahrgeschwindigkeit, indem bei höherer Fahrgeschwindigkeit die Austragseinheit so angesteuert wird, dass pro Zeiteinheit eine größere Futtermenge ausgeworfen wird, und bei niedrigerer Fahrgeschwindigkeit eine entsprechend geringere Futtermenge.

Futterschieber dienen dazu, das lose im Futtergang bereitgestellte Futter wieder nahe an den Barren heranzuführen. Das Vieh befindet sich auf der anderen Seite des Barrens, der aber ausreichend niedrig ausgeführt ist, um dem Vieh die Futteraufnahme zu ermöglichen. Das Futter muss jedoch ausreichend nahe beim Barren im Futtergang angeordnet sein und gelockert und gut gemischt dem Vieh angeboten werden. Der Futterschieber fährt hierfür den Futtergang nahe am Barren entlang und fördert das im Futtergang verstreute Futter mithilfe einer Förderschnecke wieder nahe an den Barren. In diesem Fall handelt es sich bei dem oben genannten Arbeitsvorgang um das Umschichten von Futter, und bei dem Funktionselement um die Förderschnecke, die das Futter im Zuge der Fortbewegung des Arbeitsgeräts steuerbar umschichtet.

Die Arbeitsgeräte absolvieren für die Verrichtung ihrer jeweiligen Arbeitsvorgänge selbsttätig eine im Stall oder auf dem landwirtschaftlichen Betriebsgelände vorgegebene Fahrstrecke und orientieren sich dabei beispielsweise anhand von Markierungsmagneten oder RFID-Transponder, die entlang der Fahrstrecke angeordnet sind. In einem Gehäuse des jeweiligen Arbeitsgeräts sind dabei der Radantrieb für die Räder und/oder Rollen des Arbeitsgeräts, der Antrieb für das Funktionselement, Sensoren für die Markierungsmagneten oder RFID-Transponder, eine mit den Sensoren verbundene Steuereinrichtung für den Radantrieb und das Funktionselement, sowie eine in der Regel aufladbar ausgeführte Stromversorgung für alle vorgenannten Komponenten angeordnet. Eine Positionsermittlungseinheit ermittelt aus den von den Sensoren gewonnenen Daten eine momentane Position des Arbeitsgeräts, auf deren Basis die Steuereinrichtung den Radantrieb entsprechend ansteuert, um das Arbeitsgerät entlang der Fahrstrecke zu navigieren. Zur Vervollständigung der Navigation ist des Weiteren zumeist vorgesehen, dass die Anzahl der Radumdrehungen gemessen wird, um aus dem bekannten Radumfang eine zurückgelegte Wegstrecke zu errechnen. Auf diese Weise ermittelt die Steuereinrichtung des Arbeitsgeräts momentane Positionen zwischen zwei Markierungsmagneten oder RFID-Transponder. Diese Vorgangsweise ist freilich nur ungenau, weil sich Material wie beispielsweise im Futtergang liegendes Futter an die Räder des Arbeitsgeräts anhaften kann und somit aufgrund des veränderten Radumfangs verfälschte Messungen ergibt. Eine weitere Fehlerquelle ist der Schlupf der Räder, also das Abrutschen der Räder auf glattem oder rutschigem Untergrund, wodurch ebenfalls eine ungenaue Positionsermittlung und somit eine ungenaue Navigation des Arbeitsgeräts erfolgt. Eine ungenaue Navigation kann aber bewirken, dass das Arbeitsgerät zu weit von der vorgegebenen Fahrstrecke abkommt und beispielsweise Futter nicht mit hinreichend genauer Positionierung auswirft.

Eine Lösung dieses Problems besteht darin, die als Referenzpositionen dienenden Markierungsmagnete oder RFID-Transponder hinreichend eng anzuordnen, um stete Korrekturen der Fahrbewegung vornehmen zu können und auf diese Weise Abweichungen von einer vorgegebenen Fahrstrecke hintanzuhalten. Diese Vorgangsweise erhöht aber den Aufwand für die erforderliche Infrastruktur erheblich, zudem sind die Markierungsmagnete oder RFID-Transponder einer starken Verschmutzung ausgesetzt, die ihre Funktion beeinträchtigen können.

Daher wurde in der EP 2 885 966 A1 auch vorgeschlagen, das Arbeitsgerät mit einem Raupenantrieb auszuführen, um den Schlupf zu vermeiden und auf diese Weise einen in örtlicher Hinsicht genaueren Austrag des Futters zu erreichen. Der Raupenantrieb beeinträchtigt aber die Wendigkeit des Arbeitsgeräts insbesondere in engen Futtergängen oder bei Kurvenfahrten.

Es ist somit das Ziel der Erfindung selbstfahrende Arbeitsgeräte für den Einsatz im Stall und auf landwirtschaftlichen Betriebsgeländen zur Verrichtung eines Arbeitsvorganges unter Vermeidung von Nachteilen wie höherem Aufwand für Infrastruktur oder geringerer Wendigkeit des Arbeitsgeräts so zu verbessern, dass der jeweilige Arbeitsvorgang in örtlich zuverlässiger und genauer Positionierung durchgeführt wird.

Dieses Ziel wird durch die Merkmale von Anspruch 1 sowie die Merkmale von Anspruch 4 erreicht. Anspruch 1 bezieht sich auf eine Anordnung zur Steuerung eines selbstfahrenden Arbeitsgeräts für den Einsatz im Stall und auf landwirtschaftlichen Betriebsgeländen zur Verrichtung eines Arbeitsvorganges mittels eines Funktionselements des Arbeitsgeräts, wobei am Arbeitsgerät eine Steuereinrichtung zur Ansteuerung des Funktionselements angeordnet ist und eine Positionsermittlungseinheit zur Navigation des selbstfahrenden Arbeitsgeräts entlang einer Fahrstrecke vorgesehen ist. Erfindungsgemäß wird hierbei vorgeschlagen, dass die Positionsermittlungseinheit ein am Arbeitsgerät angeordnetes, positionsermitteltes UWB (Ultra Wide Band)-Modul für das Senden und Empfangen von UWB (Ultra Wide Band)-Signalen sowie zumindest vier unbewegt im Stall und/oder am landwirtschaftlichen Betriebsgelände angeordnete UWB (Ultra Wide Band)-Referenzmodule für das Senden und Empfangen von UWB (Ultra Wide Band)-Signalen umfasst, und das positionsermittelte UWB (Ultra Wide Band)-Modul mit der Steuereinrichtung zur Ansteuerung des Funktionselements verbunden ist.

Bei UWB-Signalen, auch als Ultrabreitband-Signale bezeichnet, handelt es sich um elektromagnetische Funksignale, deren Bandbreite mehr als 500MHz oder größer als 20% der Mittenfrequenz ist und beabsichtigt erzeugt wurde. Die Erzeugung eines solchen Signals kann durch verschiedene Methoden erreicht werden. Im vorliegenden Fall werden solche Signale mithilfe ultrakurzer Pulse mit einer Pulslänge im Nanometer-Bereich oder Subnanometer-Bereich erzeugt. Mittels solcher Pulssignale können einerseits Daten übertragen werden, indem die zu übertragende Information bitweise entweder über die Pulsbreite oder in einer Pulsreihenfolge übermittelt wird. Aufgrund der Verwendung ultrakurzer Pulse kann aber auch die Zeit, zu der ein Puls von einem UWB-Modul empfangen wird, sehr genau bestimmt werden. UWB-Signale eignen sich daher auch für eine Laufzeitmessung und somit zur Bestimmung eines Abstandes zwischen zwei UWB-Modulen mithilfe von Laufzeitmessungen.

Beim Time-of-Arrival (ToA)-Verfahren etwa (oft auch als Time-of-Flight (ToF)-Verfahren bezeichnet) besitzen die zur Positionsbestimmung verwendeten UWB-Module spezielle Sender und Empfänger, welche eine exakte Zeitmessung empfangener und gesendeter Signale erlauben. Hierdurch wird es möglich, die Zeitdifferenz zwischen dem Sendevorgang am Sender und dem Empfangsvorgang an einem Empfänger zu bestimmen. Diese Zeitdifferenz entspricht der Signallaufzeit und im Fall einer Sichtverbindung zwischen Sender und Empfänger der direkten Distanz zwischen Sender und Empfänger. Des Weiteren ist es auch möglich, nicht die Laufzeit eines Signals zwischen einem Sender und einem Empfänger zu ermitteln, sondern die Differenzen der Laufzeit eines Signals zwischen einem Sender und mehreren Empfängern. In diesem Fall wird von einem Time-Difference-of-Arrival (TDoA)-Verfahren gesprochen.

Diese Verfahren der Laufzeitermittlung sind hinlänglich bekannt, und entsprechende UWB-Module zur Laufzeitermittlung kommerziell erhältlich. Im Rahmen der Erfindung wird ein UWB-Modul, das hier als positionsermitteltes UWB-Modul bezeichnet wird, am Arbeitsgerät befestigt. Im Kontext der vorliegenden Erfindung wird die Positionsbestimmung des positionsermittelten UWB-Moduls synonym für das gesamte Arbeitsgerät verwendet, da durch Kenntnis der Position des UWB-Moduls gleichzeitig auch die Position des Arbeitsgeräts bekannt ist. Die UWB-Referenzmodule sind unbewegte UWB-Module, die im Stall oder auf dem landwirtschaftlichen Betriebsgelände verteilt angeordnet sind und zur Positionsermittlung dienen. Die UWB-Referenzmodule stellen die Referenzobjekte dar, zu welchen die Position des am Arbeitsgerät befestigten UWB-Moduls berechnet werden kann. Hierfür werden zumindest vier UWB-Referenzmodule verwendet, wobei jeweils die Entfernungen zwischen jedem UWB-Referenzmodul und dem am Arbeitsgerät befestigten UWB-Modul gemessen werden. Hierbei wird näherungsweise angenommen, dass das am Arbeitsgerät befestigte UWB-Modul während dieser Messungen näherungsweise still steht, was deshalb zutreffend ist, da die Latenzzeit der Messungen mittels UWB-Signale im Hundertstelsekunden-Bereich liegt und daher sehr gering ist. Die Dauer der Messungen ist im Vergleich zur Bewegungsgeschwindigkeit des Arbeitsgeräts im vorliegenden Anwendungsfall somit vernachlässigbar klein, sodass das Arbeitsgerät während der Messung als ruhend erscheint.

Um die Position des am Arbeitsgerät befestigten UWB-Moduls im dreidimensionalen Raum eindeutig bestimmen zu können, werden erfindungsgemäß zumindest vier UWB-Referenzmodule verwendet. Das am Arbeitsgerät befestigte UWB-Modul sendet UWB-Signale an die fest installierten UWB-Referenzmodule in der Umgebung mit einem Sendeprotokoll, das auch den Sendezeitpunkt durch das UWB-Modul beinhaltet. Die UWB-Referenzmodule detektieren dieses UWB-Signal, verarbeiten das mit dem UWB-Signal übermittelte Protokoll und antworten mit einem UWB-Signal mit einem Sendeprotokoll, das neben dem vom UWB-Modul übermittelten Sendezeitpunkt noch eine Verarbeitungszeit und eine das jeweilige UWB-Referenzmodul identifizierende Information ("ID") enthält. Die Verarbeitungszeit enthält dabei eine Information über den Empfangszeitpunkt des UWB-Signals beim UWB-Referenzmodul, sowie den Sendezeitpunkt des Antwortsignals durch das UWB-Referenzmodul. Die Antwortsignale der UWB-Referenzmodule werden vom UWB-Modul des Arbeitsgeräts empfangen, das aus dem jeweils rückübermittelten Sendezeitpunkt, den Verarbeitungszeiten der UWB-Referenzmodule und den Empfangszeitpunkten beim UWB-Modul die Laufzeit des UWB-Signals ermittelt. Die Laufzeit ergibt sich aus der zeitlichen Differenz zwischen dem Sendezeitpunkt und dem Empfangszeitpunkt beim UWB-Modul abzüglich der Verarbeitungszeit beim betreffenden UWB-Referenzmodul. Die momentane Entfernung zwischen dem am Arbeitsgerät befestigten UWB-Modul und den jeweiligen UWB-Referenzmodulen ergibt sich aus der Hälfte dieser Laufzeit multipliziert mit der bekannten Signalgeschwindigkeit. Erfindungsgemäß wird somit im Wesentlichen ein ToF-Verfahren angewendet.

Da sich die einzelnen UWB-Referenzmodule in unterschiedlicher Entfernung zu dem am Arbeitsgerät befestigten UWB-Modul befinden, erreicht das UWB-Signal jedes UWB-Referenzmodul zu einem anderen Zeitpunkt, und folglich auch das Antwortsignal eines jeden UWB-Referenzmoduls das UWB-Modul am Arbeitsgerät. Diese Zeitunterschiede und die bekannten Positionen der UWB-Referenzmodule bilden die Grundlage für die Multilaterationsberechnung zur Bestimmung der Position des am Arbeitsgerät befestigten UWB-Moduls, und somit des Arbeitsgeräts. Vorteilhaft dabei ist, wenn alle UWB-Referenzmodule eine Sichtverbindung zueinander und zu dem am Arbeitsgerät befestigten UWB-Modul aufweisen.

Der Frequenzbereich von UWB-Signalen liegt zwischen 3,1 und 10,6 GHz. Dank ihrer Robustheit gegenüber Interferenzen und der hohen Datenrate von 110 kbit/s bis 6,8 Mbit/s sind sie für eine präzise Positionsbestimmung im Stallbereich oder auf landwirtschaftlichen Betriebsgeländen sehr gut geeignet. Die Genauigkeit ist mit 5-30 Zentimetern deutlich höher als bei der Verwendung von Beacons (1-3 Meter), WLAN (5-15 Meter) oder anderer herkömmlicher Systeme, die derzeit im landwirtschaftlichen Bereich eingesetzt werden. Auch Höhenunterschiede lassen sich äußerst präzise bestimmen. UWB-Signale arbeiten dabei mit der niedrigen Sendeleistung von 0,5 mW, um bereits belegte Frequenzbereiche nicht zu stören. Dadurch kann insbesondere das am Arbeitsgerät befestigte UWB-Modul auch mittels Batterie oder Akku betrieben werden, zudem im vorliegenden Anwendungsbereich ohnehin eine wiederkehrende Aufladung der Stromversorgung des Arbeitsgeräts sichergestellt ist, indem das Arbeitsgerät selbsttätig nach der vorgesehenen Verrichtung des Arbeitsvorganges an eine Aufladestation andockt.

Erfindungsgemäß ist des Weiteren das positionsermittelte UWB-Modul mit der Steuereinrichtung zur Ansteuerung des Funktionselements verbunden. Somit kann die Ansteuerung des Funktionselements in Abhängigkeit von der für das positionsermittelte UWB-Modul ermittelten Position erfolgen. Das ermöglicht eine örtlich präzis lokalisierte Verrichtung des Arbeitsvorganges mithilfe des Funktionselements des Arbeitsgeräts, da das Funktionselement nun anhand der momentanen Position des Arbeitsgeräts gesteuert werden kann, was mit herkömmlichen Systemen nicht möglich ist, die etwa lediglich anhand der momentanen Fahrgeschwindigkeit den Arbeitsvorgang zu steuern vermögen.

UWB-Module sind kommerziell erhältlich und werden etwa auch als "Ranging and Communication"-Module bezeichnet. Sie bestehen im Wesentlichen aus einer Leiterplatte (PCB), auf der fast alle für den korrekten Betrieb notwendigen Komponenten vereint sind. Jedes UWB-Modul hat zudem eine frei programmierbare ID, welche die Identifikation eines bestimmten UWB-Moduls in der Applikation möglich macht. Diese ID wird bei jeder Übertragung mitgesendet, sodass alle empfangenden UWB-Module zielgerichtet kommunizieren können. Für den Betrieb sind zusätzlich noch eine Spannungsversorgung und eine Antenne notwendig. Die Spannungsversorgung ist am Arbeitsgerät ohnehin vorhanden. Hinsichtlich der Antenne wird vorgeschlagen, dass das positionsermittelte UWB-Modul eine externe Antenne für das Senden und Empfangen von UWB-Signalen aufweist, die vom Arbeitsgerät nach oben absteht. Diese Anordnung erleichtert die für die Genauigkeit der Positionsbestimmung vorteilhafte Sichtverbindung zwischen dem am Arbeitsgerät befestigten UWB-Modul und den UWB-Referenzmodulen.

Beim Arbeitsgerät handelt es sich etwa um einen Futtertransporter. Beim entsprechenden Arbeitsvorgang handelt es sich somit um den Austrag von Futter, wobei der Austrag des Futters mithilfe der Erfindung nun in Abhängigkeit von der für das positionsermittelte UWB-Modul ermittelten Position erfolgen kann. Das ermöglicht eine örtlich präzis lokalisierte Abgabe vorgegebener Futtermengen, da das Funktionselement, also die Austragseinheit, nun anhand der momentanen Position des Arbeitsgeräts erfolgen kann. So kann etwa positionsabhängig die abgegebene Futtermenge verändert werden, was mit herkömmlichen Systemen nicht möglich ist, die wie oben beschrieben lediglich anhand der momentanen Fahrgeschwindigkeit die abgegebene Futtermenge steuern.

In entsprechender Weise wird ein Verfahren zur Steuerung eines selbstfahrenden Arbeitsgeräts für den Einsatz im Stall und auf landwirtschaftlichen Betriebsgeländen zur Verrichtung eines Arbeitsvorganges mittels eines Funktionselements des Arbeitsgeräts vorgeschlagen, wobei eine Ansteuerung des Funktionselements mittels einer am Arbeitsgerät angeordneten Steuereinrichtung erfolgt, und die Navigation des selbstfahrenden Arbeitsgeräts entlang einer Fahrstrecke mithilfe einer wiederholt vorgenommenen Positionsermittlung des Arbeitsgeräts entlang der Fahrstrecke erfolgt. Erfindungsgemäß ist hierbei vorgesehen, dass die Positionsermittlung mithilfe eines am Arbeitsgerät angeordneten positionsermittelten UWB (Ultra Wide Band)-Moduls für das Senden und Empfangen von UWB (Ultra Wide Band)-Signalen sowie zumindest vier unbewegt im Stall und/oder am landwirtschaftlichen Betriebsgelände angeordneten UWB (Ultra Wide Band)-Referenzmodulen für das Senden und Empfangen von UWB (Ultra Wide Band)-Signalen erfolgt, und die Ansteuerung des Funktionselements mittels der für das positionsermittelte UWB (Ultra Wide Band)-Modul ermittelten Position erfolgt.

Wie bereits ausgeführt wurde, wird die Positionsermittlung vorzugsweise mithilfe eines Time-of-Flight (ToF)-Verfahrens durchgeführt, indem das am Arbeitsgerät angeordnete positionsermittelte UWB-Modul UWB-Signale mit einem den Sendezeitpunkt enthaltenden Sendeprotokoll an die UWB-Referenzmodule sendet, die UWB-Referenzmodule diese UWB-Signale detektieren, das mit dem UWB-Signal übermittelte Protokoll verarbeiten, und mit einem UWB-Signal antworten, das neben einer das jeweilige UWB-Referenzmodul identifizierenden Information auch die Verarbeitungszeit des empfangenen UWB-Signals enthält, und die Antwortsignale der UWB-Referenzmodule vom positionsermittelten UWB-Modul des Arbeitsgeräts empfangen werden, das aus dem jeweils rückübermittelten Sendezeitpunkt, den Verarbeitungszeiten und dem Empfangszeitunkt des Antwortsignals beim UWB-Modul des Arbeitsgeräts die momentanen Entfernungen zwischen dem am Arbeitsgerät befestigten, positionsermittelten UWB-Modul und den jeweiligen UWB-Referenzmodulen sowie die momentane Position des Arbeitsgeräts berechnet. Die Verarbeitungszeit errechnet sich aus dem Empfangszeitpunkt des UWB-Signals durch ein UWB-Referenzmodul und dem Sendezeitpunkt des Antwortsignals durch das betreffende UWB-Referenzmodul.

Bei dem Arbeitsvorgang handelt es sich etwa um den Austrag von Futter, wobei der Austrag des Futters in Abhängigkeit von der für das positionsermittelte UWB-Modul ermittelten Position erfolgt.

Dabei ist es durchaus überraschend, dass trotz der Unwägbarkeiten hinsichtlich Synchronisierung der Zeitgeber der beteiligten UWB-Module, Latenzzeit der Signalverarbeitung, Bewegung des Arbeitsgeräts und der örtlichen Gegebenheiten im Stall und auf landwirtschaftlichen Betriebsgeländen eine hochpräzise Positionsbestimmung mithilfe von UWB-Signalen gelingt, die sich für eine selbsttätige Navigation des Arbeitsgeräts und eine örtlich präzise Ansteuerung des Funktionselements eignet. Als zusätzlicher Vorteil kann auf eine aufwändige Infrastruktur für die Signalgebung zur Positionsermittlung verzichtet werden. Das erfindungsgemäße Verfahren kann vom Arbeitsgerät autonom durchgeführt werden und erfordert lediglich den Datenaustausch zwischen dem UWB-Modul des Arbeitsgeräts und den UWB-Referenzmodulen, aber keine Anbindung an eine externe Infrastruktur wie eine Netzwerkanbindung oder eine Anbindung und Informationsverarbeitung durch einen externen Server und dergleichen.

Die Erfindung wird in weiterer Folge anhand eines Ausführungsbeispiels mithilfe der beiliegenden Figuren näher erläutert. Es zeigen hierbei die
Fig. 1 eine schematische Darstellung eines landwirtschaftlichen Betriebsgeländes mit einem Stall und einer strichliert eingezeichneten, vorgegebenen Fahrstrecke für ein als Futtertransporter ausgeführtes Arbeitsgerät, und die
Fig. 2 eine schematische Darstellung einer Ausführungsform eines selbstfahrenden Arbeitsgeräts.

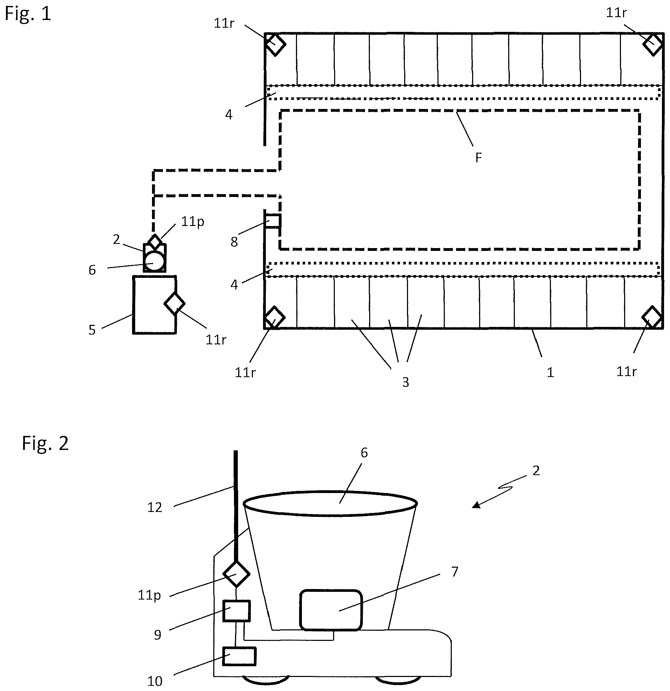

Zunächst wird auf die Fig. 1 Bezug genommen, die eine schematische Darstellung eines landwirtschaftlichen Betriebsgeländes mit einem Stall 1 und einer strichliert eingezeichneten, vorgegebenen Fahrstrecke F für ein als Futtertransporter ausgeführtes Arbeitsgerät 2 zeigt. Im Stall 1 sind Stellplätze 3 für das Vieh ersichtlich, das durch den Futtertransporter mit Futter versorgt wird. Das in den Stellplätzen 3 gehaltene Vieh kann dabei das vom Futtertransporter während seiner Fahrt entlang der Fahrstrecke F am Futtergang 4 abgelegte Futter erreichen. Der Futtertransporter fährt selbsttätig ein Futterlager 5 an, das sich in der Regel am landwirtschaftlichen Betriebsgelände außerhalb des Stalls 1 befindet, wo der Aufnahmeraum 6 des Futtertransporters (siehe auch Fig. 2) mit Futter befüllt wird. Die Befüllung erfolgt in der Regel automatisiert anhand vorgegebener Füllmengen. Zudem kann der Futtertransporter mit einer Wiegeeinrichtung versehen sein, um das Gewicht des aufgenommenen Futters und somit die Futtermenge zu bestimmen. Des Weiteren kann ein Mischer innerhalb des Aufnahmeraums 6 vorgesehen sein, um das aufgenommene Futter zu durchmischen. Es kann auch vorgesehen sein, dass der Futtertransporter mehrere Futterlager 5 anfährt, um unterschiedliche Futterarten aufzunehmen, die mit dem Mischer vermengt werden. Nach Befüllung des Futtertransporters mit den vorgegebenen Futterarten und Futtermengen fährt er in weiterer Folge eine vorgegebene Fahrstrecke F ab, die ihn zum Futtergang 4 führt, wo er seitlich des Futterganges 4 entlangfährt. Für den Auswurf des Futters weist der Futtertransporter eine seitliche Öffnung auf, die bei Erreichen des Futterganges 4 geöffnet werden kann. Mithilfe einer steuerbaren Austragseinheit, beispielsweise einer Förderschnecke, wird das Futter in weiterer Folge in den Futtergang 4 des Stalls 1 ausgebracht. In diesem Fall handelt es sich bei dem Funktionselement 7 um die seitliche Öffnung sowie die Austragseinheit des Futtertransporters, wobei das Funktionselement 7 das Futter aus dem Aufnahmeraum 6 des Arbeitsgeräts 2 dosiert und hinsichtlich der ausgetragenen Futtermenge steuerbar auswirft und in der Fig. 2 lediglich stilisiert eingezeichnet ist.

Nach dem vollständigen Austrag des Futters und somit der Beendigung des Arbeitsvorganges ist in der Regel vorgesehen, dass das Arbeitsgerät 2 selbsttägig eine Aufladestation 8 anfährt, an der das Arbeitsgerät 2 andockt und wo eine am Arbeitsgerät 2 angeordnete Stromversorgung wieder aufgeladen wird. Das Arbeitsgerät 2 kann ferner mit einem Display und/oder einer Eingabeeinheit versehen sein, um Arbeitsparameter des Arbeitsgeräts 2 abzurufen oder zu überwachen, oder um eine Steuereinrichtung 9 des Arbeitsgeräts 2 zu programmieren. Freilich kann das Arbeitsgerät 2 auch in einer drahtlosen Datenverbindung mit einem Server oder einem mobilen Endgerät ("Smartphone") stehen, um Daten auszulesen, Daten einzugeben oder eine Programmierung der Steuereinrichtung 9 vorzunehmen.

Eine schematische Darstellung einer Ausführungsform eines selbstfahrenden Arbeitsgeräts 2 ist in der Fig. 2 gezeigt. Es sind zunächst der Aufnahmeraum 6 für das Futter sowie die seitliche Öffnung sowie die Austragseinheit des Futtertransporters als Funktionselement 7 des Arbeitsgeräts 2 ersichtlich. Schematisch ist ferner die Steuereinrichtung 9 gezeigt, die das Funktionselement 7 sowie einen Antrieb 10 für die Räder oder Rollen des Arbeitsgeräts 2 ansteuert. Diese Ansteuerung umfasst hinsichtlich des Antriebs 10 die Fahrgeschwindigkeit sowie Fahrrichtung des Arbeitsgeräts 2, und hinsichtlich des Funktionselements 7 im gezeigten Ausführungsbeispiel das Öffnen und Schließen der seitlichen Öffnung sowie die Betätigung der Austragseinheit mit variierender Austragsgeschwindigkeit für das Futter. Falls eine Wiegeeinrichtung und/oder ein Mischer im Aufnahmeraum 6 vorgesehen sind, werden auch diese Komponenten von der Steuereinrichtung 9 gesteuert. Die hier beschriebenen Komponenten sind jedoch Stand der Technik und hinlänglich bekannt.

Im Rahmen der vorliegenden Erfindung ist das Arbeitsgerät 2 zusätzlich mit einem UWB-Modul 11p ausgestattet, das UWB-Signale senden, empfangen sowie analysieren kann. Dieses UWB-Modul 11p ist am Arbeitsgerät 2 befestigt und mit einer externen Antenne 12 versehen. Die Antenne 12 steht vom Arbeitsgerät 2 nach oben ab, um eine direkte Sichtverbindung zu den am landwirtschaftlichen Betriebsgelände verteilt angeordneten UWB-Referenzmodulen 11r zu ermöglichen, wodurch die Positionsermittlung genauer wird. Auch die UWB-Referenzmodule 11r können UWB-Signale senden, empfangen sowie verarbeiten. Im gezeigten Ausführungsbeispiel sind vier UWB-Referenzmodule 11r im Stall 1 angeordnet, sowie ein weiteres UWB-Referenzmodul 11r am Futterlager 5 (siehe Fig. 1). Die UWB-Referenzmodule 11r sind so am landwirtschaftlichen Betriebsgelände und im Stall 1 anzuordnen, dass das Arbeitsgerät 2 auf seiner gesamten Fahrstrecke F zumindest mit drei, vorzugsweise vier UWB-Referenzmodule 11r eine Funkverbindung für den Austausch von UWB-Signalen herstellen kann.

Das am Arbeitsgerät 2 befestigte UWB-Modul 11p sendet UWB-Signale mit einem den Sendezeitpunkt enthaltenden Sendeprotokoll an die fest installierten UWB-Referenzmodule 11r in der Umgebung. Die UWB-Referenzmodule 11r detektieren dieses UWB-Signal, verarbeiten das mit dem UWB-Signal übermittelte Protokoll und antworten mit einem UWB-Signal, das neben einer das jeweilige UWB-Referenzmodul 11r identifizierenden Information ("ID") auch die Verarbeitungszeit des empfangenen UWB-Signals enthält. Die Verarbeitungszeit errechnet sich aus dem Empfangszeitpunkt des UWB-Signals durch ein UWB-Referenzmodul 11r und dem Sendezeitpunkt des Antwortsignals durch das betreffende UWB-Referenzmodul 11r. Die Antwortsignale der UWB-Referenzmodule 11r werden vom UWB-Modul 11p des Arbeitsgeräts 2 empfangen, das aus dem jeweils rückübermittelten Sendezeitpunkt, den Verarbeitungszeiten und dem Empfangszeitunkt des Antwortsignals beim UWB-Modul 11p des Arbeitsgeräts 2 die momentane Entfernung zwischen dem am Arbeitsgerät 2 befestigten UWB-Modul 11p und den jeweiligen UWB-Referenzmodulen 11r berechnet. Da sich die einzelnen UWB-Referenzmodule 11r in unterschiedlicher Entfernung zu dem am Arbeitsgerät 2 befestigten UWB-Modul 11p befinden, erreicht das UWB-Signal jedes UWB-Referenzmodul 11r zu einem anderen Zeitpunkt, sowie jedes Antwortsignal das UWB-Modul 11p am Arbeitsgerät 2 zu einem unterschiedlichen Zeitpunkt. Diese Zeitunterschiede und die bekannten Positionen der UWB-Referenzmodule 11r bilden die Grundlage für die Multilaterationsberechnung zur Bestimmung der Position des am Arbeitsgerät 2 befestigten UWB-Moduls 11p, und somit des Arbeitsgeräts 2.

Das positionsermittelte UWB-Modul 11p ist mit der Steuereinrichtung 9 zur Ansteuerung des Funktionselements 7 verbunden. Somit kann die Ansteuerung des Funktionselements 7 und somit der Austrag des Futters in Abhängigkeit von der für das positionsermittelte UWB-Modul 11p ermittelten Position erfolgen. Das ermöglicht eine örtlich präzis lokalisierte Abgabe vorgegebener Futtermengen, da die Austragseinheit nun anhand der momentanen Position des Arbeitsgeräts 2 gesteuert werden kann. So kann etwa die abgegebene Futtermenge auch positionsabhängig verändert werden, was mit herkömmlichen Systemen nicht möglich ist.

Die Erfindung ermöglicht somit selbstfahrende Arbeitsgeräte 2 für den Einsatz im Stall 1 und auf landwirtschaftlichen Betriebsgeländen zur Verrichtung eines Arbeitsvorganges in örtlich zuverlässiger und genauer Positionierung. Dabei kann auf eine aufwändige Infrastruktur für die Signalgebung zur Positionsermittlung verzichtet werden. Das vorgeschlagene Verfahren zur Navigation und Positionsermittlung kann vom Arbeitsgerät 2 autonom durchgeführt werden und erfordert lediglich den Datenaustausch zwischen dem UWB-Modul 11p des Arbeitsgeräts 2 und den UWB-Referenzmodulen 11r, aber keine Anbindung an eine externe Infrastruktur wie eine Netzwerkanbindung oder eine Anbindung und Informationsverarbeitung durch einen externen Server und dergleichen. Freilich kann das Arbeitsgerät 2 mit einer Schnittstelle zur Anbindung an einen externen Server oder einem mobilen Endgerät ("Smartphone") versehen sein, die aber lediglich dazu dient um Daten auszulesen, Daten einzugeben oder eine Programmierung der Steuereinrichtung 9 vorzunehmen.

## Patentansprüche

1. Anordnung zur Steuerung eines selbstfahrenden Arbeitsgeräts (2) für den Einsatz im Stall (1) und auf landwirtschaftlichen Betriebsgeländen zur Verrichtung eines Arbeitsvorganges mittels eines Funktionselements (7) des Arbeitsgeräts (2), wobei am Arbeitsgerät (2) eine Steuereinrichtung (9) zur Ansteuerung des Funktionselements (7) angeordnet ist und eine Positionsermittlungseinheit zur Navigation des selbstfahrenden Arbeitsgeräts (2) entlang einer Fahrstrecke (F) vorgesehen ist, **dadurch gekennzeichnet, dass** die Positionsermittlungseinheit ein am Arbeitsgerät (2) angeordnetes, positionsermitteltes UWB (Ultra Wide Band)-Modul (11p) für das Senden und Empfangen von UWB (Ultra Wide Band)-Signalen sowie zumindest vier unbewegt im Stall (1) und/oder am landwirtschaftlichen Betriebsgelände angeordnete UWB (Ultra Wide Band)-Referenzmodule (11r) für das Senden und Empfangen von UWB (Ultra Wide Band)-Signalen umfasst, und das positionsermittelte UWB (Ultra Wide Band)-Modul (11p) mit der Steuereinrichtung (9) zur Ansteuerung des Funktionselements (7) verbunden ist.

2. Anordnung zur Steuerung eines selbstfahrenden Arbeitsgeräts (2) nach Anspruch 1, **dadurch gekennzeichnet, dass** das positionsermittelte UWB-Modul (11p) eine externe Antenne (12) für das Senden und Empfangen von UWB-Signalen aufweist, die vom Arbeitsgerät (2) nach oben absteht.

3. Anordnung zur Steuerung eines selbstfahrenden Arbeitsgeräts (2) nach Anspruch 1 oder 2, **dadurch gekennzeichnet, dass** es sich bei dem Arbeitsgerät (2) um einen Futtertransporter handelt.

4. Verfahren zur Steuerung eines selbstfahrenden Arbeitsgeräts (2) für den Einsatz im Stall (1) und auf landwirtschaftlichen Betriebsgeländen zur Verrichtung eines Arbeitsvorganges mittels eines Funktionselements (7) des Arbeitsgeräts 2), wobei eine Ansteuerung des Funktionselements (7) mittels einer am Arbeitsgerät (2) angeordneten Steuereinrichtung (9) erfolgt, und die Navigation des selbstfahrenden Arbeitsgeräts (2) entlang einer Fahrstrecke (F) mithilfe einer wiederholt vorgenommenen Positionsermittlung des Arbeitsgeräts (2) entlang der Fahrstrecke (F) erfolgt, **dadurch gekennzeichnet, dass** die Positionsermittlung mithilfe eines am Arbeitsgerät (2) angeordneten positionsermittelten UWB (Ultra Wide Band)-Moduls (11p) für das Senden und Empfangen von UWB (Ultra Wide Band)-Signalen sowie zumindest vier unbewegt im Stall (1) und/oder am landwirtschaftlichen Betriebsgelände angeordneten UWB (Ultra Wide Band)-Referenzmodulen (11r) für das Senden und Empfangen von UWB (Ultra Wide Band)-Signalen erfolgt, und die Ansteuerung des Funktionselements (7) mittels der für das positionsermittelte UWB (Ultra Wide Band)-Modul (11p) ermittelten Position erfolgt.

5. Verfahren nach Anspruch 4, **dadurch gekennzeichnet, dass** die Positionsermittlung mithilfe eines Time-of-Flight (ToF)-Verfahrens durchgeführt wird, indem das am Arbeitsgerät (2) angeordnete positionsermittelte UWB-Modul (11p) UWB-Signale mit einem den Sendezeitpunkt enthaltenden Sendeprotokoll an die UWB-Referenzmodule (11r) sendet, die UWB-Referenzmodule (11r) diese UWB-Signale detektieren, das mit dem UWB-Signal übermittelte Protokoll verarbeiten, und mit einem UWB-Signal antworten, das neben einer das jeweilige UWB-Referenzmodul (11r) identifizierenden Information auch die Verarbeitungszeit des empfangenen UWB-Signals enthält, und die Antwortsignale der UWB-Referenzmodule (11r) vom positionsermittelten UWB-Modul (11p) des Arbeitsgeräts (2) empfangen werden, das aus dem jeweils rückübermittelten Sendezeitpunkt, den Verarbeitungszeiten und dem Empfangszeitunkt des Antwortsignals beim UWB-Modul (11p) des Arbeitsgeräts (2) die momentane Position des Arbeitsgeräts (2) berechnet.

6. Verfahren nach Anspruch 4 oder 5, **dadurch gekennzeichnet, dass** es sich bei dem Arbeitsvorgang um den Austrag von Futter handelt, wobei der Austrag des Futters in Abhängigkeit von der für das positionsermittelte UWB-Modul ermittelten Position erfolgt.
